# FASCICULE DE BREVET EUROPEEN

(11) **EP 1 067 324 B1**
(45) Date de publication et mention de la délivrance du brevet: **22.06.2005**
(21) Numéro de dépôt: 00420150.5
(22) Date de dépôt: 05.07.2000
(51) Int. Cl.: F16L 33/26

(54) **Raccord instantané pour tube composite à âme métallique**
Schnellkupplung für Verbundrohr mit metallischem Kern
Quick-connect coupling for composite tubing with metallic core

(30) Priorité: 09.07.1999 FR 9909121
(43) Date de publication de la demande: 10.01.2001
(73) Titulaire: Comap Abbeville S.A., 80100 Abbeville (FR)
(72) Inventeur: Leger, Jacky M., 80132 Neuilly L'Hopital (FR)
(74) Mandataire: Maureau, Philippe

(56) Documents cités:
- EP-A- 0 879 985
- DE-A- 19 702 289
- DE-U- 29 711 313
- US-A- 5 090 741

## Description

La présente invention concerne un raccord instantané pour un tube composite à âme métallique, ainsi qu'un procédé pour réaliser un tel raccord.

Pour raccorder des tubes composites à âme métallique, on utilise le plus souvent une douille de sertissage. Le tube, qui comporte généralement une couche intérieure de matière synthétique, une âme métallique en aluminium par exemple et une enveloppe externe en matière synthétique, est emmanché sur une canule et serti à l'aide d'un outil de sertissage sur celle-ci. Une douille de sertissage, emmanchée préalablement sur l'extrémité du tube à raccorder, permet de réaliser ce sertissage.

Il est également connu de réaliser des raccords instantanés. On utilise pour se faire un dispositif comportant une bague d'accrochage. Cette bague d'accrochage comprend une couronne annulaire de laquelle font saillie radialement vers l'intérieur des dents inclinées par rapport à l'axe du raccord. Lorsque le tube à raccorder passe au niveau de la bague d'accrochage, les dents de celle-ci s'inclinent et lorsque l'on souhaite retirer ce tube, les dents viennent s'arc-bouter empêchant ainsi tout retrait de ce tube.

L'homme du métier connaît des raccords à sertir et des raccords instantanés de l'art antérieur. Plusieurs brevets concernent de tels raccords. On peut par exemple citer le brevet EP 0 611 911 pour les raccords à sertir et la demande de brevet DE 33 22 202 pour les raccords instantanés.

Le document DE 197 02 289 A1 présente un dispositif de raccord instantané de tuyaux ou tubes avec une valve ou autres installations. Le raccord s'effectue par l'intermédiaire d'une pièce tubulaire du type canule disposée entre les deux pièces à raccorder. La canule est maintenue grâce à une bague de serrage périphérique contre sa face externe et/ou à au moins une autre bague de serrage similaire contre sa face interne. Les deux bagues définissent un espace destiné à recevoir l'extrémité du tube à raccorder, et sont serrées sous l'action d'une pièce tubulaire de type écrou venant recouvrir l'ensemble.

Toutefois, il n'est pas connu d'utiliser des raccords instantanés pour des tubes composites à âme métallique. En effet, plusieurs problèmes techniques se posent pour l'utilisation d'un raccord instantané avec de tels tubes.

Tout d'abord, les tolérances dimensionnelles d'un tube composite rendent difficile l'utilisation d'un raccord instantané pour lequel des tolérances relativement faibles sont nécessaires pour pouvoir garantir une bonne étanchéité. De plus, suite à la coupe du tube, l'extrémité du tube n'est plus cylindrique.

Un autre problème concerne la protection de l'âme métallique, en général en aluminium, du tube composite. Cette âme doit être protégée de tout contact avec le fluide circulant dans le tube mais également d'un contact avec d'autres pièces métalliques, notamment en laiton ou cuivreuses, pour éviter des problèmes de corrosion.

Une autre corrosion peut également apparaître si les dents de la bague d'accrochage viennent au contact de l'âme métallique du tube après avoir abîmé l'enveloppe extérieure en matière synthétique.

La présente invention a alors pour but de fournir un raccord et un procédé de raccordement permettant de réaliser un raccord instantané pour un tube composite à âme métallique.

A cet effet, elle propose un procédé permettant de réaliser un raccord instantané avec un tube composite à âme métallique qui comporte les étapes suivantes :
- introduction dans le tube composite à raccorder d'une canule sur laquelle est monté un joint d'étanchéité,
- recalibrage du tube monté sur la canule d'un point de vue de sa conformité diamétrale et/ou de sa cylindricité, réalisant la fixation du tube sur la canule par déformation mécanique à froid de l'âme du tube,
- introduction de l'extrémité de tube calibrée et de la canule dans un dispositif de raccordement comportant une bague d'accrochage à dents élastiques.

La combinaison d'une opération de calibrage avec l'introduction d'une canule dans l'extrémité du tube à raccorder permet d'obtenir un raccord instantané étanche et résistant mécaniquement, dans lequel le tube est fixé mécaniquement sur la canule au cours de cette opération, par déformation mécanique à froid de l'âme métallique du tube.

Avantageusement, lors du recalibrage, un retrait est réalisé sur la face extérieure du tube au droit du joint d'étanchéité. Ceci permet de garantir l'efficacité du joint d'étanchéité.

Pour permettre de visualiser par la suite l'enfoncement du tube dans le raccord, on peut, lors de l'opération de recalibrage, réaliser un marquage à une distance prédéterminée de la face frontale du tube.

Pour faciliter l'introduction du tube dans le raccord, on peut profiter de l'opération de recalibrage pour arrondir l'extrémité du tube à raccorder.

La présente invention concerne également un raccord instantané pour tube composite à âme métallique qui comporte :
- une canule coopérant avec une extrémité du tube à raccorder et avec un corps de raccordement tubulaire,
- un joint d'étanchéité monté entre la canule et le tube,
- un joint d'étanchéité monté entre la canule et le corps,
et caractérisé en ce que :
- l'extrémité du tube est fixée sur la canule grâce à une opération de recalibrage permettant la déformation mécanique à froid de l'âme métallique du tube, et l'ajustement éventuel de sa cylindricité,
- et en ce qu'il comporte un dispositif de raccordement instantané avec une bague d'accrochage comportant des dents s'étendant radialement vers l'intérieur et inclinées par rapport à l'axe du tube, la bague d'accrochage étant disposée contre la paroi interne du corps et en contact avec l'extrémité du tube, uniquement sur sa surface extérieure.

Le joint entre la canule et le tube est par exemple un joint torique.

Le dispositif de raccordement comporte avantageusement une entretoise et une douille de maintien entre lesquelles est disposée la bague d'accrochage. Dans ce cas, pour limiter le coût de revient du dispositif de raccordement en limitant le nombre de joints mis en oeuvre, on peut avantageusement prévoir que la canule présente un épaulement, que l'extrémité de tube à raccorder est montée sur la partie de la canule de plus petit diamètre extérieur, que l'entretoise est disposée au niveau de l'épaulement et qu'un joint d'étanchéité, notamment un joint torique, est disposé à l'extrémité de l'entretoise opposée à la bague d'accrochage et sur la partie de la canule de plus grand diamètre.

Pour avoir une meilleure étanchéité entre le tube et la canule, le tube comporte avantageusement un retrait sur sa face extérieure, au droit du joint d'étanchéité disposé entre le tube et la canule.

Dans une forme de réalisation préférentielle facilitant l'introduction du tube dans le raccord, l'extrémité du tube est arrondie.

De toute façon, l'invention sera bien comprise à l'aide de la description qui suit, en référence au dessin schématique annexé représentant à titre d'exemples non limitatifs deux formes de réalisation d'un raccord selon l'invention.
Figure 1 est une vue en coupe longitudinale à travers un premier raccord selon l'invention,
Figure 2 est une vue illustrant une étape du procédé de raccordement selon l'invention, et
Figure 3 est une vue correspondant à la figure 1 pour un autre raccord selon l'invention.

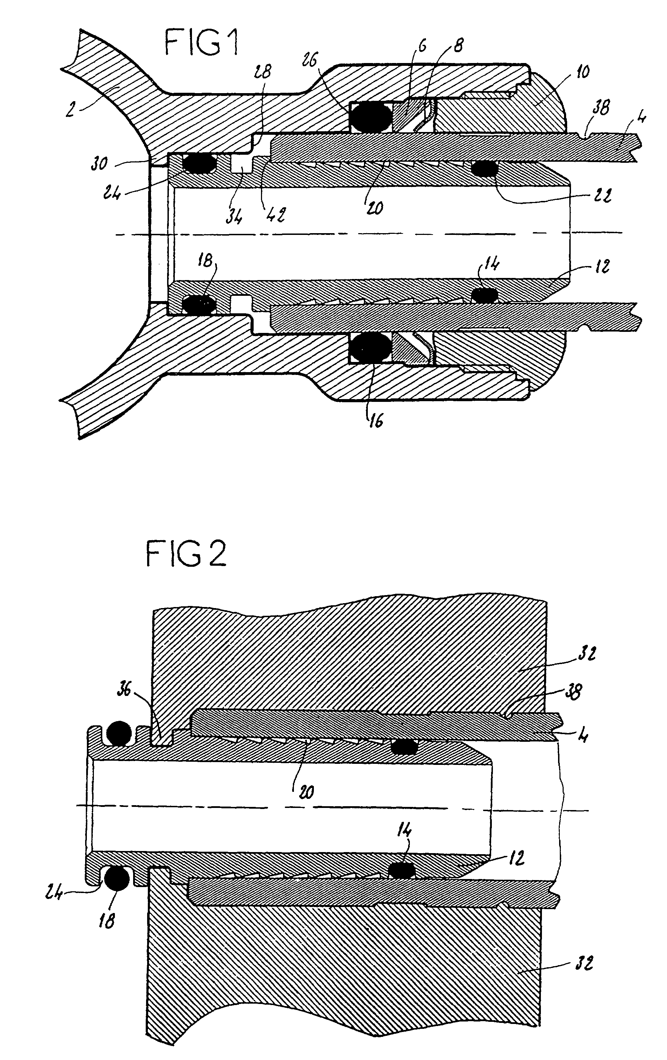

La figure 1 montre en coupe longitudinale un raccord instantané pour l'extrémité d'un tube composite. On peut voir sur cette figure un corps 2 de raccordement, l'extrémité d'un tube 4 composite, une entretoise 6, une bague d'accrochage 8, une douille 10, une canule 12, un premier joint torique 14, un second joint torique 16 et un troisième joint torique 18.

Le corps 2 est un corps en forme de douille destiné à recevoir l'extrémité du tube à raccorder. Sa paroi intérieure est conformée de manière à pouvoir recevoir les divers éléments décrits ci-dessous.

Le tube à raccorder 4 est un tube composite. Il comporte une couche intérieure en matière synthétique, une âme métallique en aluminium et une enveloppe extérieure en matière synthétique.

L'extrémité du tube 4 est montée sur la canule 12. Cette dernière se présente sous la forme d'une douille cylindrique. Sa surface extérieure comprend une zone destinée à être montée à l'intérieur du corps 2 et une zone de raccordement 20 destinée à recevoir l'extrémité du tube 4. Cette zone de raccordement 20 comporte de manière connue des dents annulaires inclinées qui présentent en coupe transversale une section rappelant un sapin. Ces dents ne gênent pas l'introduction de l'extrémité du tube 4 sur la zone de raccordement 20 mais permettent un maintien de ce tube 4 sur la zone de raccordement car elles s'opposent à un retrait du tube 4 de la canule 12. Au niveau de cette zone de raccordement 20, on trouve également un logement 22 destiné à recevoir le premier joint torique 14. Un second logement 24 pour le troisième joint torique 18 est également prévu sur la surface extérieure de la canule 12. Ce logement 24 est disposé au niveau de la zone de la canule destinée à faire face au corps 2 de raccordement.

De manière classique, on trouve alignés l'un derrière l'autre le second joint torique 16, l'entretoise 6, la bague d'accrochage 8 et la douille 10. La bague d'accrochage 8 est ainsi maintenue en position entre l'entretoise 6 et la douille 10. Le second joint torique 16 vient réaliser une étanchéité à l'extrémité de cet ensemble. La bague d'accrochage 8 est une bague de type connu. Elle comporte une couronne annulaire et des dents inclinées qui s'étendent vers l'intérieur de cette couronne annulaire. Ces dents sont inclinées de telle sorte qu'elles fléchissent lors de l'introduction du tube 4 dans le corps du raccord mais s'arc-boutent lorsque l'on tente de retirer l'extrémité du tube 4.

Comme on peut le voir sur la figure 1, la paroi intérieure du corps 2 de raccordement est étagée. Elle présente trois principaux épaulements. Le diamètre intérieur du corps 2 est maximal du côté de sa face destinée à l'introduction du tube composite 4 et va en diminuant lorsque l'on pénètre dans ce corps 2. Un premier épaulement 26 est destiné à permettre le positionnement de l'ensemble formé par le second joint torique 16, l'entretoise 6, la bague d'accrochage 8 et la douille 10. Un second épaulement 28 est prévu à proximité de l'extrémité du tube composite 4, une fois celui-ci raccordé. Enfin, le troisième épaulement 30 est destiné à servir de butée à la canule 12.

Avant d'introduire l'ensemble formé par l'extrémité du tube 4 et la canule 12 dans le corps 2 de raccordement, le tube 4 subit une opération de "préparation". Cette étape est illustrée sur la figure 2.

L'ensemble formé par l'extrémité du tube 4 à raccorder et la canule 12 est placé entre les mâchoires d'un outil de sertissage miniaturisé. Un tel outil de sertissage est par exemple connu de l'homme du métier sous la marque déposée DUBUIS. La figure 2 montre l'ensemble tube/canule entre deux mâchoires 32. La canule 12 présente une rainure annulaire 34 destinée à coopérer avec une nervure annulaire 36 de mâchoire 32 pour permettre un bon positionnement de ces mâchoires 32 par rapport à la canule 12 et au tube 4. Les mâchoires 32 sont conformées de telle sorte qu'elles provoquent un retrait au droit du premier joint torique 14, c'est-à-dire au droit du logement 22 destiné à recevoir ce joint torique 14, exécutent un marquage du tube 4 pour repérer ultérieurement l'enfoncement de celui-ci et arrondissent l'extrémité du tube pour faciliter par la suite son introduction dans le corps 2. La pression exercée par l'outil de sertissage par l'intermédiaire des mâchoires 32 sur le tube 4 permet également de recalibrer ce tube tant d'un point de vue de sa conformité diamétrale que d'un point de vue de sa cylindricité, et d'assurer une déformation mécanique à froid de l'âme métallique du tube 4 pour réaliser sa fixation sur la canule.

Une fois le tube 4 recalibré, l'ensemble formé par la canule 12, le tube 4, les premier et troisième joints toriques 14, 18 , est introduit dans le corps 2. La canule 12 vient buter contre l'épaulement 30. Le troisième joint torique 18 placé dans son logement 24, vient réaliser l'étanchéité avec la paroi intérieure du corps 2. L'épaulement 28 est placé volontairement à distance de la face frontale de l'extrémité du tube 4 afin d'éviter tout contact entre le tube 4 et le corps 2. Ceci permet d'éviter des problèmes de corrosion. Les joints toriques permettent d'empêcher au fluide circulant à travers le raccord de venir au contact avec l'âme métallique du tube 4.

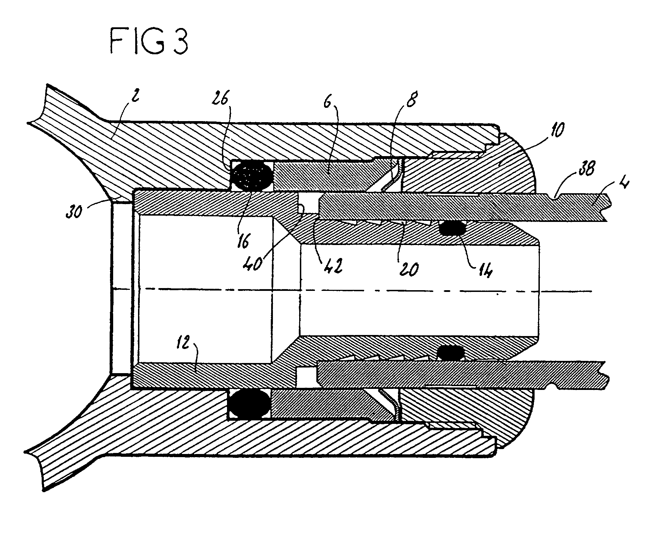

La figure 3 montre une seconde forme de réalisation dans laquelle on retrouve tous les éléments de la figure 1 sauf le troisième joint torique 18. Les mêmes références sont conservées pour désigner les éléments remplissant des fonctions analogues.

Le second joint torique 16 reprend ici des fonctions des second et troisième joints toriques 16 et 18 de la figure 1. La canule 12, l'entretoise 6 et le corps 2 présentent pour se faire des formes différentes.

La surface extérieure de la canule 12 présente ici un épaulement 40. On trouve toujours une zone de raccordement 20 avec un profil rappelant un sapin et un logement pour le premier joint torique 14 et une zone destinée à venir au contact de la paroi interne du corps 2. La zone de raccordement 20 est d'un diamètre inférieur ici à la partie venant épouser la forme de la paroi intérieure du corps 2. La hauteur de l'épaulement 40 correspond sensiblement à l'épaisseur du tube 4, de telle sorte que lorsque l'extrémité du tube 4 est emmanchée sur la zone de raccordement 20 on obtient un ensemble présentant une surface extérieure sensiblement cylindrique. Une butée 42, également présente sur la forme de réalisation de la figure 1, permet de limiter l'emmanchement de l'extrémité du tube 4 sur la canule 12. Cette butée 42 est placée ici de telle sorte que la face frontale de l'extrémité du tube 4 ne vienne pas en butée contre l'épaulement 40. On évite ainsi de réaliser un contact entre le métal de la canule 12 et le métal de l'âme du tube 4. Bien entendu, la hauteur de la butée 42 est inférieure à l'épaisseur de la couche intérieure de matière synthétique du tube 4.

La paroi intérieure du corps 2 ne présente plus que deux épaulements. On retrouve l'épaulement 26 pour l'ensemble formé par le second joint torique 16, l'entretoise 6, la bague d'accrochage 8 et la douille 10 et un épaulement 30 contre lequel vient buter la canule 12. La longueur axiale de l'entretoise 6 est telle que le second joint torique 16 se trouve au niveau de la canule 12 dans la partie de plus grand diamètre. Ainsi, ce joint torique 16 réalise l'étanchéité entre l'extérieur et l'intérieur du raccord mais également l'étanchéité entre la canule 12 et le corps 2.

Pour réaliser le raccordement de l'extrémité du tube 4, on vient également recalibrer celui-ci comme illustré sur la figure 2. La forme des mâchoires 32 est bien entendu adaptée alors à la nouvelle forme de l'ensemble tube/canule.

Pour éviter un éventuel problème de corrosion entre la bague d'accrochage 8 et l'âme métallique, en aluminium, du tube 4 à raccorder, il est possible d'utiliser un tube composite dont la couche externe en matière synthétique est plus importante que sur les tubes actuellement sur le marché. Pour se faire, on peut choisir d'augmenter le diamètre extérieur du tube composite ou bien on peut jouer sur le diamètre extérieur de l'âme en aluminium du tube pour réaliser cette couche extérieure plus importante.

Comme il va de soi, l'invention ne se limite pas aux deux formes de réalisation décrites ci-dessus à titre d'exemples non limitatifs ; elle en embrasse au contraire toutes les variantes dans le cadre des revendications ci-après.

## Revendications

1. Procédé permettant de réaliser un raccord instantané avec un tube composite (4) à âme métallique, **caractérisé en ce qu'**il comporte les étapes suivantes :
- introduction dans le tube composite (4) à raccorder d'une canule (12) sur laquelle est monté un joint d'étanchéité (14),
- recalibrage du tube (4) monté sur la canule (12) du point de vue de sa conformité diamétrale et/ou de sa cylindricité, réalisant la fixation du tube (4) sur la canule (12) par déformation mécanique à froid de l'âme métallique du tube (4),
- introduction de l'extrémité de tube (4) calibrée et de la canule (12) dans un dispositif de raccordement comportant une bague d'accrochage (8) à dents élastiques.

2. Procédé selon la revendication 1, **caractérisé en ce que** lors du recalibrage, un retrait est réalisé sur la face extérieure du tube au droit du joint d'étanchéité (14).

3. Procédé selon l'une des revendications 1 ou 2, **caractérisé en ce que** lors de l'opération de recalibrage, un marquage (38) est réalisé à une distance prédéterminée de la face frontale du tube (4) de manière à pouvoir visualiser par la suite l'enfoncement du tube (4) dans un raccord.

4. Procédé selon l'une des revendications 1 à 3, **caractérisé en ce que** lors de l'opération de recalibrage, l'extrémité du tube (4) est arrondie.

5. Raccord instantané pour tube composite (4) à âme métallique, comportant :
- une canule (12) coopérant avec une extrémité du tube (4) à raccorder et avec un corps de raccordement tubulaire (2),
- un joint d'étanchéité (14) monté entre la canule (12) et le tube (4),
- un joint d'étanchéité (18) monté entre la canule (12) et le corps (2),
et **caractérisé en ce que** :
- l'extrémité du tube (4) est fixée sur la canule (12) grâce à une opération de recalibrage permettant la déformation mécanique à froid de l'âme métallique du tube (4), et l'ajustement éventuel de sa cylindricité,
- et **en ce qu'**il comporte un dispositif de raccordement instantané avec une bague d'accrochage (8) comportant des dents s'étendant radialement vers l'intérieur et inclinées par rapport à l'axe du tube, la bague d'accrochage (8) étant disposée contre la paroi interne du corps (2) et en contact avec l'extrémité du tube, uniquement sur sa surface extérieure.

6. Raccord instantané selon la revendication 5, **caractérisé en ce que** le joint (14) entre la canule (12) et le tube (4) est un joint torique.

7. Raccord instantané selon l'une d es revendications 5 ou 6, **caractérisé en ce que** le dispositif de raccordement comporte une entretoise (6) et une douille de maintien (10) entre lesquels est disposée la bague d'accrochage (8).

8. Raccord instantané selon la revendication 7, **caractérisé en ce que** la canule (12) présente un épaulement (40), **en ce que** l'extrémité de tube à raccorder (4) est montée sur la partie de la canule (12) de plus petit diamètre extérieur, **en ce que** l'entretoise (6) est disposée au niveau de l'épaulement (40) et **en ce qu'**un joint d'étanchéité (16), notamment un joint torique, est disposé à l'extrémité de l'entretoise (6) opposée à la bague d'accrochage (8) et sur la partie de la canule (12) de plus grand diamètre.

9. Raccord instantané selon l'une des revendications 5 à 8, **caractérisé en ce que** le tube (4) comporte un retrait sur sa face extérieure, au droit du joint d'étanchéité (14) disposé entre le tube et la canule.

10. Raccord instantané selon l'une des revendications 5 à 9, **caractérisé en ce que** l'extrémité du tube (4) est arrondie.

## Patentansprüche

1. Verfahren, das die Herstellung einer Schnellkupplung mit einem Verbundrohr (4) mit einem Metallkern ermöglicht,
**dadurch gekennzeichnet,**
**daß** es die folgenden Schritte aufweist:
- Einführen einer Kanüle (12), auf der eine Dichtung (14) montiert ist, in das anzuschließende Verbundrohr (4),
- Nachkalibrieren des auf die Kanüle (12) montierten Rohres (4) hinsichtlich der Konformität seines Durchmessers und/oder seiner zylindrischen Form unter Durchführen der Befestigung des Rohres (4) an der Kanüle (12) mittels mechanischer Kaltverformung des Metallkerns des Rohres (4),
- Einführen des Endes des kalibrierten Rohres (4) und der Kanüle (12) in eine Verbindungsvorrichtung, welche einen Einhakring (8) mit elastischen Zähnen aufweist.

2. Verfahren nach Anspruch 1,
**dadurch gekennzeichnet,**
**daß** beim Nachkalibrieren eine Aussparung auf der Außenseite des Rohres gegenüber von der Dichtung (14) hergestellt wird.

3. Verfahren nach einem der Ansprüche 1 und 2,
**dadurch gekennzeichnet,**
**daß** bei dem Schritt des Nachkalibrierens eine Markierung (38) in einem vorgegebenen Abstand von der Stirnseite des Rohres (4) hergestellt wird, so daß es anschließend möglich ist, die Einschubtiefe des Rohres (4) in einer Kupplung anzuzeigen.

4. Verfahren nach einem der Ansprüche 1 bis 3,
**dadurch gekennzeichnet,**
**daß** bei dem Schritt des Nachkalibrierens das Ende des Rohres (4) abgerundet wird.

5. Schnellkupplung für ein Verbundrohr (4) mit einem Metallkern, welche folgendes aufweist:
- eine Kanüle (12), die mit einem Ende des anzuschließenden Rohres (4) und mit einem rohrförmigen Kupplungskörper (2) zusammenwirkt,
- eine zwischen der Kanüle (12) und dem Rohr (4) montierte Dichtung (14), und
- eine zwischen der Kanüle (12) und dem Körper (2) montierte Dichtung (18),
**dadurch gekennzeichnet,**
- **daß** das Ende des Rohres (4) durch einen Schritt des Nachkalibrierens, der das mechanische Kaltverformen des Metallkerns des Rohres (4) und gegebenenfalls das Einstellen seiner zylindrischen Form ermöglicht, an der Kanüle (12) befestigt ist,
- und **daß** sie eine Schnellkupplungsvorrichtung mit einem Einhakring (8) aufweist, welcher Zähne aufweist, die sich radial zum Inneren hin erstrecken und in Bezug auf die Rohrachse geneigt sind, wobei der Einhakring (8) gegen die Innenwand des Körpers (2) anliegend angeordnet ist und mit dem Ende des Rohres nur auf dessen Außenfläche in Berührung steht.

6. Schnellkupplung nach Anspruch 5,
**dadurch gekennzeichnet,**
**daß** die Dichtung (14) zwischen der Kanüle (12) und dem Rohr (4) eine O-Ring-Dichtung ist.

7. Schnellkupplung nach einem der Ansprüche 5 oder 6,
**dadurch gekennzeichnet,**
**daß** die Kupplungsvorrichtung eine Zwischenhülse (6) und eine Haltefassung (10) aufweist, zwischen denen der Einhakring (8) angeordnet ist.

8. Schnellkupplung nach Anspruch 7,
**dadurch gekennzeichnet,**
**daß** die Kanüle (12) eine Schulter (30) aufweist,
**daß** das Ende des anzuschließenden Rohres (4) auf dem Teil der Kanüle (12) mit dem kleinsten Außendurchmesser montiert ist,
**daß** die Zwischenhülse (6) auf der Höhe der Schulter (40) angeordnet ist, und
**daß** eine Dichtung (16), insbesondere ein O-Ring, an dem dem Einhakring (8) gegenüberliegenden Ende der Zwischenhülse (6) und auf dem Teil der Kanüle (12) mit dem größten Durchmesser angeordnet ist.

9. Schnellkupplung nach einem der Ansprüche 5 bis 8,
**dadurch gekennzeichnet**,
das Rohr (4) auf seiner Außenseite gegenüber von der zwischen dem Rohr und der Kanüle angeordneten Dichtung (14) eine Aussparung aufweist.

10. Schnellkupplung nach einem der Ansprüche 5 bis 9,
**dadurch gekennzeichnet**,
das Ende des Rohres (4) abgerundet ist.

## Claims

1. Method for producing a rapid connection with a metal-cored composite tube (4), **characterised in that** it comprises the following steps:
- introduction into the composite tube (4) to be connected of a sleeve (12) on which a seal (14) is mounted,
- recalibration of the tube (4) mounted on the sleeve (12) with respect to its diametric conformity and/or its cylindricity, producing a fixing of the tube (4) on the sleeve (12) by cold mechanical deformation of the metal core of the tube (4),
- introduction of the end of the calibrated tube (4) and the sleeve (12) into a connecting device including a locking ring (8) having elastic teeth.

2. Method according to claim 1, **characterised in that** during recalibration an indent is formed on the outer face of the tube in line with the seal (14).

3. Method according to either of claims 1 or 2, **characterised in that** during the recalibration operation a mark (38) is made at a predetermined distance from the front face of the tube (4) so that subsequent insertion of the tube (4) into a connector can be indicated visually.

4. Method according to any one ot claims 1 to 3, **characterised in that** the end of the tube (4) is rounded during the recalibration operation.

5. Rapid connector for a metal-cored composite tube (4), comprising:
- a sleeve (12) cooperating with an end of the tube (4) to be connected and with a tubular connecting body (2),
- a seal (14) mounted between the sleeve (13) and the body (2),
and **characterised in that**:
- the end of the tube (4) is fixed on the sleeve (12) by virtue of a recalibration operation enabling the cold mechanical deformation of the metal core of the tube (4) and adjustment of its cylindricity, if applicable,
- it includes a rapid connection device having a locking ring (8) including teeth extending radially inwardly and inclined with respect to the axis of the tube, the locking ring (8) being disposed against the internal wall of the body (2) and being in contact with the end of the tube only on its outer surface.

6. Rapid connector according to claim 5, **characterised in that** the seal (14) between the sleeve (12) and the tube (4) is an O-ring.

7. Rapid connector according to either of claims 5 or 6, **characterised in that** the connecting device includes a distance collar (6) and a retaining bush (10) between which the locking ring (8) is arranged.

8. Rapid connector according to claim 7, **characterised in that** the sleeve (12) has a shoulder (40), **in that** the end of the tube to be connected (4) is mounted on the part of the sleeve (12) having the smaller external diameter, **in that** the distance collar (6) is arranged level with the shoulder (40) and **in that** a seal (16), in particular an O-ring, is arranged at the end of the distance collar (6) opposite to the locking ring (8) and on the part of the sleeve (12) of larger diameter.

9. Rapid connector according to any one of claims 5 to 8, **characterised in that** the tube (4) includes an indent in its outer face in line with the seal (14) arranged between the tube and the sleeve.

10. Rapid connector according to any one of claims 5 to 9, **characterised in that** the end of the tube (4) is rounded.
